# EUROPÄISCHE PATENTSCHRIFT

(11) **EP 4 196 386 B1**
(45) Veröffentlichungstag und Bekanntmachung des Hinweises auf die Patenterteilung: **24.12.2025**
(21) Anmeldenummer: 21751578.2
(22) Anmeldetag: 02.08.2021
(51) Int. Cl.: B62D 35/02

(54) **LUFTLEITEINRICHTUNG FÜR EINEN KRAFTWAGEN, INSBESONDERE FÜR EINEN PERSONENKRAFTWAGEN, SOWIE KRAFTWAGEN**
AIR-GUIDING DEVICE FOR A MOTOR VEHICLE, IN PARTICULAR FOR A PASSENGER CAR, AND MOTOR VEHICLE
DISPOSITIF DE GUIDAGE D'AIR POUR UN VÉHICULE AUTOMOBILE, EN PARTICULIER POUR UNE VOITURE DE TOURISME ET VÉHICULE À MOTEUR

(30) Priorität: 14.09.2020 DE 102020005602
(43) Veröffentlichungstag der Anmeldung: 21.06.2023
(73) Patentinhaber: Mercedes-Benz Group AG, 70372 Stuttgart (DE)
(72) Erfinder: PUDELL, Etienne, 71034 Böblingen (DE)
(74) Vertreter: Novagraaf Group
(86) Internationale Anmeldenummer: PCT/EP2021/071516
(87) Internationale Veröffentlichungsnummer: WO 2022/053224

(56) Entgegenhaltungen:
- EP-A1- 3 103 652
- WO-A1-2017/089574
- WO-A1-2017/103359
- DE-A1- 102017 221 009
- DE-A1- 3 921 736

## Beschreibung

Die Erfindung betrifft eine Luftleiteinrichtung für einen Kraftwagen gemäß dem Oberbegriff des Anspruchs 1. Des Weiteren betrifft die Erfindung einen Kraftwagen mit wenigstens einer solchen Luftleiteinrichtung.

Aus der DE 10 2013 108 762 A1 geht ein Kraftfahrzeug mit einem Radkasten und einer im Bereich des Radkastens angeordneten, in den Radkasten ragenden Abdeckung zum Verringern der Einströmung von Luft in den Radkasten bei fahrendem Kraftfahrzeug hervor. Die Abdeckung ist um eine Längsachse des Kraftfahrzeugs verschwenkbar mit einer Unterbodenverkleidung des Kraftfahrzeugs, auf der dem Radkasten zugewandten Seite der Unterbodenverkleidung, verbunden.

Die DE 39 21 736 A offenbart eine Luftleiteinrichtung gemäß dem Oberbegriff des Anspruchs 1.

Aufgabe der vorliegenden Erfindung ist es, eine Luftleiteinrichtung für einen Kraftwagen sowie einen Kraftwagen mit einer solchen Luftleiteinrichtung zu schaffen, so dass eine besonders vorteilhafte Aerodynamik des Kraftwagens realisiert werden kann.

Diese Aufgabe wird erfindungsgemäß durch eine Luftleiteinrichtung mit den Merkmalen des Anspruchs 1 sowie durch einen Kraftwagen mit den Merkmalen des Anspruchs 10 gelöst. Vorteilhafte Ausgestaltungen mit zweckmäßigen Weiterbildungen der Erfindung sind Gegenstand der abhängigen Ansprüche.

Ein erster Aspekt der Erfindung betrifft eine Luftleiteinrichtung für einen Kraftwagen, insbesondere für einen Personenkraftwagen. Die Luftleiteinrichtung umfasst wenigstens ein Luftleitelement, welches einem um eine Raddrehachse, insbesondere relativ zu einem Aufbau des Kraftwagens, drehbaren Rad zugeordnet ist. Das Rad umfasst eine Felge, welche einen Innendurchmesser aufweist. Beispielsweise ist auf die Felge ein Reifen des Rads aufgezogen. Das Rad ist ein Bodenkontaktelement, über welches der auch als Kraftfahrzeug bezeichnete Kraftwagen in Fahrzeughochrichtung nach unten hin an einem Boden abstützbar oder abgestützt ist. Hierbei berührt das Rad, insbesondere der Reifen, den Boden direkt. Der zuvor genannte Aufbau des Kraftwagens bildet oder begrenzt einen auch als Fahrgastraum bezeichneten Innenraum des Kraftwagens, in dessen Innenraum sich Personen wie beispielsweise der Fahrer des Kraftwagens aufhalten können. Beispielsweise ist der Aufbau eine selbsttragende Karosserie. Wird der Kraftwagen entlang des Bodens gefahren, während der Kraftwagen über das Rad in Fahrzeughochrichtung nach unten hin an dem Boden abgestützt ist, so dreht sich das Rad relativ zu dem Aufbau um die Raddrehachse, und das Rad rollt dabei an dem Boden ab.

Das Luftleitelement weist dabei eine Luftleitfläche auf, mittels welcher Luft, die bei einer Fahrt, insbesondere einer Vorwärtsfahrt, des Kraftwagens die Luftleitfläche anströmt, zu leiten ist beziehungsweise geleitet wird.

Um nun eine besonders vorteilhafte Aerodynamik des Kraftwagens realisieren zu können, das heißt um den Luftwiderstand des Kraftwagens besonders gering halten zu können, so dass der Kraftwagen besonders energieeffizient angetrieben werden kann, ist es erfindungsgemäß vorgesehen, dass sich die Luftleitfläche in einer senkrecht zur Raddrehachse verlaufenden Ebene erstreckt. Verläuft die Raddrehachse beispielsweise in Fahrzeugquerrichtung beziehungsweise parallel zur Fahrzeugquerrichtung, so ist die Ebene durch die Fahrzeuglängsrichtung (x-Richtung) und die Fahrzeughochrichtung (z-Richtung) aufgespannt, so dass dann die Ebene auch als x-z-Ebene bezeichnet wird. Es ist denkbar, dass das Rad ein ungelenktes Rad ist, welches nicht gelenkt werden kann. Ferner ist es denkbar, dass das Rad ein gelenktes Rad ist, welches beispielsweise zum Bewirken von Spurwechseln beziehungsweise Richtungsänderungen des Kraftwagens verschwenkt beziehungsweise gelenkt werden kann. Vorzugsweise ist dann, wenn das Rad ein lenkbares Rad ist, das Luftleitelement beziehungsweise die Luftleitfläche mit dem Rad mitlenkbar. Somit ist es vorzugsweise vorgesehen, dass sich die Luftleitfläche stets in der oder einer senkrecht zur Raddrehachse verlaufenden Ebene erstreckt. Insbesondere dann, wenn das Rad ein nicht-lenkbares Rad ist beziehungsweise dann, wenn das beispielsweise als lenkbares Rad ausgebildete Rad für eine Geradeausfahrt des Kraftwagens eingestellt und somit nicht eingeschlagen ist, fällt die Ebene mit der x-z-Ebene zusammen beziehungsweise die Ebene verläuft dann parallel zur x-z-Ebene.

Des Weiteren ist es erfindungsgemäß vorgesehen, dass die Luftleitfläche an einen in Fahrzeughochrichtung unteren Bereich einer inneren beziehungsweise der inneren Flanke der Felge in Fahrzeugquerrichtung nach innen und/oder in Fahrzeughochrichtung nach oben unmittelbar angrenzt. Hierunter ist insbesondere zu verstehen, dass zwischen der Luftleitfläche beziehungsweise dem Luftleitelement und der Flanke kein anderes, weiteres Bauteil angeordnet ist. Außerdem ist es vorzugsweise vorgesehen, die Luftleitfläche beziehungsweise das Luftleitelement die Flanke nicht berührt, mithin von der Flanke beabstandet ist, insbesondere derart, dass zwischen der Luftleitfläche beziehungsweise dem Luftleitelement und der Flanke ein geringer Luftspalt von beispielsweise wenigen Millimetern angeordnet ist. Der Luftspalt ist beispielsweise einerseits direkt durch die Flanke und andererseits direkt durch das Luftleitelement begrenzt und vorzugsweise höchstens zehn Millimeter, insbesondere höchstens fünf Millimeter, breit. Mit anderen Worten ist es vorgesehen, dass die Luftleitfläche im unteren Bereich der Felge unmittelbar in y-Richtung und/oder in z-Richtung an die Felge beziehungsweise an die Flanke angrenzend angeordnet ist.

Die Beabstandung des Luftleitelements von der Felge derart, dass zwischen der Luftleitfläche und der Flanke der Luftspalt angeordnet ist, ist vorteilhaft, um ein Schleifen des Luftleitelements an der Felge zu verhindern, wenn sich die Felge bei einer Fahrt um die Raddrehachse relativ zu dem Luftleitelement dreht. Es ist jedoch möglich, dass die Luftleitfläche beziehungsweise das Luftleitelement an der Felge gelagert ist, insbesondere derart, dass die Luftleitfläche beziehungsweise das Luftleitelement gegen die Felge insbesondere mittels wenigstens einer Dichtung abgedichtet ist. Hierdurch kann eine besonders hohe aerodynamische Effizienz realisiert werden.

Des Weiteren ist es erfindungsgemäß vorgesehen, dass sich die Luftleitfläche des sich unterhalb der Raddrehachse angeordneten Luftleitelements in Fahrzeughochrichtung, insbesondere ausgehend von der Flanke nach oben, über weniger als die Hälfte, insbesondere über weniger als ein Drittel, des auch als Felgeninnendurchmesser bezeichneten Innendurchmessers der Felge erstreckt. Hierdurch kann während der Fahrt des Kraftwagens Luft mittels der Luftleitfläche besonders vorteilhaft geleitet werden, so dass der Luftwiderstand des Kraftwagens im Vergleich zu herkömmlichen Kraftwagen reduziert werden kann. In der Folge kann der Kraftwagen besonders energieeffizient angetrieben werden, so dass der Kraftwagen beispielsweise kraftstoffverbrauchsarm angetrieben werden kann, oder der Kraftwagen kann über eine besonders hohe Reichweite, insbesondere rein, elektrisch angetrieben werden. Es hat sich gezeigt, dass ohne die Verwendung des Luftleitelements bei einer Fahrt des Kraftwagens Luft entlang einer Innenflanken des Reifens strömen kann, so dass in der Folge die entlang der Innenflanke strömende Luft auf die Felge trifft, wodurch es zu einem hohen Luftwiderstand kommen kann. Eine solche unerwünschte Strömung der Luft kann nun vermieden werden. Mit anderen Worten kann die Luftleitfläche die entlang der Innenflanke strömende Luft daran hindern, übermäßig in das Rad beziehungsweise in die Felge einzuströmen. Das einfach auch als Leitelement bezeichnete Luftleitelement und insbesondere dessen auch als Leitfläche bezeichnete Luftleitfläche können auch ein übermäßiges Eindringen von Schnee und/oder Verschmutzung in die Felge verhindern. Hierdurch kann eine übermäßige Korrosion von Bauteilen wie beispielsweise Achsbauteilen des Kraftwagens vermieden werden, da diese Bauteile vor übermäßiger Verschmutzung und Bewurf mit Schnee und/oder anderen Gegenständen mittels des Luftleitelements geschützt werden können.

In vorteilhafter Ausgestaltung der Erfindung weist das Luftleitelement wenigstens eine die Luftleitfläche durchdringende und somit von Luft durchströmbare Durchgangsöffnung auf. Hierdurch kann einerseits eine besonders vorteilhafte Aerodynamik des Kraftwagens realisiert werden. Andererseits kann hierdurch eine hinreichende Bremsenbelüftung realisiert werden. Die die Durchgangsöffnung durchströmende Luft kann beispielsweise einer dem Rad zugeordneten Bremse zugeführt werden, wodurch die Bremse vorteilhaft belüftet werden kann.

Um einerseits die Bremse bedarfsgerecht belüften zu können und andererseits eine vorteilhafte Aerodynamik des Kraftwagens bedarfsgerecht realisieren zu können, ist es in weiterer Ausgestaltung der Erfindung vorgesehen, dass der Durchgangsöffnung wenigstens ein Schließelement zugeordnet ist. Das Schließelement ist relativ zu dem Luftleitelement zwischen wenigstens einer Schließstellung und wenigstens einer Offenstellung bewegbar. Beispielsweise ist das Schließelement translatorisch und/oder rotatorisch relativ zu dem Luftleitelement bewegbar. In der Schließstellung ist zumindest ein Teilbereich der Durchgangsöffnung durch das Schließelement überdeckt und somit verschlossen. Insbesondere kann vorgesehen sein, dass das Schließelement in der Schließstellung zumindest einen überwiegenden Teil, das heißt mehr als die Hälfte, der Durchgangsöffnung überdeckt und somit verschließt. Vorzugsweise ist es vorgesehen, dass in der Schließstellung das Schließelement die gesamte Durchgangsöffnung überdeckt und somit verschließt. Somit kann in der Schließstellung Luft nicht durch den Teilbereich beziehungsweise nicht durch die Durchgangsöffnung hindurchströmen. In der Offenstellung jedoch gibt das Schließelement zumindest den Teilbereich, insbesondere mehr als die Hälfte der Durchgangsöffnung und ganz vorzugsweise die gesamte Durchgangsöffnung, frei, so dass dann Luft, insbesondere zum Belüften der Bremse, durch die Durchgangsöffnung hindurchströmen kann. Dabei hat es sich als besonders vorteilhaft gezeigt, wenn das Schließelement zwischen der Offenstellung und der Schließstellung bewegbar an dem Luftleitelement gehalten ist. Dadurch kann ein kompakter und somit strömungsgünstiger Aufbau der Luftleiteinrichtung gewährleistet werden.

Um zumindest den Teilbereich der Durchgangsöffnung bedarfsgerecht freigeben und verschließen zu können, ist es in weiterer Ausgestaltung der Erfindung vorgesehen, dass die Luftleiteinrichtung einen elektrisch und/oder hydraulisch und/oder pneumatisch betreibbaren Aktor umfasst, mittels welchem das Schließelement zwischen der Schließstellung und der Offenstellung relativ zu dem Luftleitelement bewegbar ist.

Eine weitere Ausführungsform zeichnet sich dadurch aus, dass die Luftleiteinrichtung wenigstens ein Federelement umfasst, mittels welchem das Schließelement aus der Offenstellung in die Schließstellung und/oder aus der Schließstellung in die Offenstellung bewegbar ist. Vorzugsweise ist das Federelement eine mechanische Feder. Durch Verwendung des Federelements kann ein besonders einfacher und somit aerodynamisch vorteilhafter sowie gewichts- und kostengünstiger Aufbau gewährleistet werden.

Um das Schließelement besonders einfach bewegen und somit einen aerodynamisch vorteilhaften Aufbau der Luftleiteinrichtung realisieren zu können, ist es in weiterer Ausgestaltung der Erfindung vorgesehen, dass die Luftleiteinrichtung wenigstens ein Bimetall und/oder wenigstens eine Formgedächtnislegierung zum Bewegen des Schließelements umfasst. Hierunter ist insbesondere zu verstehen, dass das Schließelement mittels des Bimetalls beziehungsweise mittels der Formgedächtnislegierung aus der Schließstellung in die Offenstellung und/oder aus der Offenstellung in die Schließstellung bewegbar ist.

Bei einer weiteren, besonders vorteilhaften Ausführungsform der Erfindung ist das Rad um die Raddrehachse relativ zu dem Luftleitelement drehbar. Das Luftleitelement und die Luftleitfläche verbleiben somit unabhängig von der Drehung des Rads in dem unteren Bereich, so dass eine besonders vorteilhafte Luftführung darstellbar ist.

Bei einer weiteren, besonders vorteilhaften Ausführungsform der Erfindung ist das Luftleitelement an einem Radlenker gehalten, über welchen das Rad gelenkig an dem Aufbau des Kraftwagens gehalten ist. Der Radlenker lässt beispielsweise in Fahrzeughochrichtung erfolgende Ein- und Ausfederbewegungen des Rads zu. Da vorzugsweise das Luftleitelement zumindest mittelbar an dem Radlenker gehalten ist, kann sich das Luftleitelement in Fahrzeughochrichtung mit dem Rad mitbewegen. Hierdurch kann sichergestellt werden, dass das Luftleitelement stets eine vorteilhafte Ausrichtung beziehungsweise Positionierung relativ zu dem Rad und somit insbesondere relativ zu der Felge aufweist.

Insbesondere ist es denkbar, dass das Luftleitelement an einem Radträger gehalten und somit mit dem Radträger und dem Rad mitbewegbar ist, wobei jedoch das Rad relativ zu dem Radträger und relativ zu dem Luftleitelement drehbar ist. Das Rad ist beispielsweise über ein Radlager drehbar an dem Radträger gehalten. Dadurch, dass das Luftleitelement zumindest mittelbar, beispielsweise über den Radträger, an dem Radlenker gehalten ist, insbesondere unabhängig von dem Rad, ist das Luftleitelement achsfest montiert. Hierdurch verbleibt das Luftleitelement bei einem Radwechsel, in dessen Rahmen das Rad gewechselt und gegen ein anderes Rad ausgetauscht wird, an dem Radlenker. Außerdem kann hierdurch eine vorteilhafte Zugänglichkeit insbesondere zu der Bremse gewährleistet werden, was insbesondere bei einer Reparatur oder einer Wartung vorteilhaft ist. Insbesondere dann, wenn das Luftleitelement zumindest mittelbar, insbesondere direkt, an dem Radträger gehalten ist, ist das Luftleitelement dann, wenn das Rad als gelenktes Rad ausgebildet ist, mit dem Radträger und somit mit dem Rad mitlenkbar, so dass eine vorteilhafte und aerodynamisch günstige Ausrichtung des Luftleitelements und dem Luftleitfächer relativ zu dem Rad gewährleistet werden kann.

Weitere, der Erfindung zugrundeliegende Erkenntnisse sind, dass vor allem bei Fahrzeugen mit einer hohen Bodenfreiheit, das heißt mit einem hohen Bodenabstand wie beispielsweise Geländewagen, Luft an einem Unterboden des jeweiligen Fahrzeugs entlangströmen und zu der inneren, auch als Radflanke bezeichneten Flanke gelangen und auf die Felge, insbesondere auf deren inneren Ring, auftreffen kann. Dieses Auftreffen kann für einen übermäßigen Luftwiderstand sorgen. Sportliche Fahrzeuge mit einem demgegenüber geringeren Bodenabstand können fest montierte Leitschaufeln aufweisen, die zur Bremsenkühlung Frischluft zu den Bremsen führen können. Dieses Prinzip erzeugt jedoch permanent Luftwiderstand, wobei insbesondere dann, wenn die Bremsen eine geringe Temperatur aufweisen, eine Kühlung der Bremsen unerwünscht ist. Mittels der erfindungsgemäßen Luftleiteinrichtung kann nun eine vorteilhafte und gezielte Führung von Luft realisiert werden. Es ist denkbar, dass die Luftleitfläche beziehungsweise das Luftleitelement zumindest in einem Teil gewölbt ausgebildet ist, so dass sich beispielsweise an die sich in der genannten Ebene erstreckende Luftleitfläche eine unebene beziehungsweise gewölbte, weitere Luftleitfläche, insbesondere direkt, anschließt.

Eine weitere Ausführungsform zeichnet sich dadurch aus, dass das Luftleitelement wenigstens einen oder mehrere, von der Luftleitfläche in Fahrzeugquerrichtung, insbesondere nach innen hin, abstehenden Wirbelgenerator aufweist, mittels welchem gezielt wenigstens ein Wirbel der das Luftleitelement anströmenden Luft erzeugbar ist. Dies bedeutet, dass mittels des Wirbelgenerators eine gezielte Verwirbelung der Luft realisierbar ist, so dass eine besonders vorteilhafte Aerodynamik darstellbar ist.

Der zuvor genannte Aktor zum Bewegen des Schließelements ist beispielsweise ein Stellmotor, mittels welchem eine bedarfsgerechte Bremsenkühlung darstellbar ist. Das genannte Bimetall beziehungsweise die genannte Formgedächtnislegierung ermöglichen eine temperaturabhängige Bewegung des Schließelements. Hierunter ist insbesondere zu verstehen, dass sich die Formgedächtnislegierung beziehungsweise das Bimetall bei Änderung einer Temperatur der Formgedächtnislegierung beziehungsweise des Bimetalls verformt, wodurch das Schließelement relativ zu dem Luftleitelement bewegt wird. Hierdurch kann auf besonders einfache und somit aerodynamisch günstige Weise ein bedarfsgerechtes Freigeben beziehungsweise Verschließen der Durchgangsöffnung realisiert werden.

Ein zweiter Aspekt der Erfindung betrifft einen vorzugsweise als Personenkraftwagen ausgebildeten Kraftwagen, welcher wenigstens eine Luftleiteinrichtung gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile und Einzelheiten der Erfindung ergeben sich aus der nachfolgenden Beschreibung sowie anhand der Zeichnung. Dabei zeigen:
- Fig. 1: eine schematische und perspektivische Unteransicht einer Luftleiteinrichtung für einen Kraftwagen gemäß einer ersten Ausführungsform, mit einem Luftleitelement, welches eine Luftleitfläche aufweist, die sich in einer senkrecht zu einer Raddrehachse eines Rads verlaufenden Ebene erstreckt;
- Fig. 2: eine schematische und perspektivische Unteransicht der Luftleiteinrichtung gemäß einer zweiten Ausführungsform; und
- Fig. 3: eine schematische und perspektivische Unteransicht der Luftleiteinrichtung gemäß einer dritten Ausführungsform.

In den Figuren sind gleiche oder funktionsgleiche Elemente mit gleichen Bezugszeichen versehen.

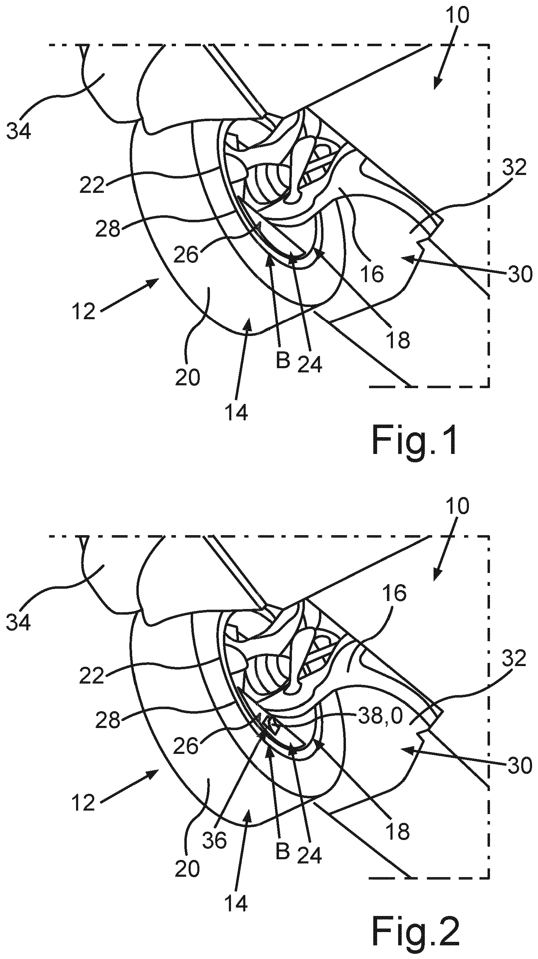

Figur 1 zeigt in einer schematischen und perspektivischen Unteransicht einen Ausschnitt eines Vorderwagens eines als Personenkraftwagen ausgebildeten Kraftwagens mit Blickrichtung von schräg unten in Richtung auf die Innenseite eines Rades 14. Zu erkennen ist eine erste Ausführungsform einer Luftleiteinrichtung des Kraftwagens. Dies bedeutet, dass der Kraftwagen in seinem vollständig hergestellten Zustand die Luftleiteinrichtung umfasst. Außerdem umfasst der Kraftwagen einen als selbsttragende Karosserie ausgebildeten Aufbau, welcher einen Innenraum des Kraftwagens begrenzt beziehungsweise bildet. Im Innenraum können sich Personen wie beispielsweise der Fahrer des Kraftwagens während einer jeweiligen Fahrt des Kraftwagens aufhalten. Der Aufbau umfasst einen auch als Unterboden bezeichneten Boden, durch welchen der Innenraum in Fahrzeughochrichtung nach unten hin zumindest teilweise, insbesondere zumindest überwiegend oder vollständig, begrenzt ist. Dabei ist in Figur 1 ein Teil einer Unterbodenverkleidung 10 des Kraftwagens erkennbar, durch dessen Unterbodenverkleidung 10 der Boden in Fahrzeughochrichtung (z-Richtung im Fahrzeugkoordinatensystem) nach unten hin überdeckt und somit verkleidet ist.

Der Kraftwagen umfasst außerdem eine Achse 12, welche wenigstens oder genau zwei, in Fahrzeugquerrichtung (y-Richtung im Fahrzeugkoordinatensystem) voneinander beabstandete und auch als Bodenkontaktelemente oder Fahrzeugräder bezeichnete Räder aufweist. Von den Rädern der Achse 12 ist in Figur 1 das mit dem Bezugszeichen 14 versehene Rad erkennbar. Das Rad 14 ist drehbar an einem in Figur 1 nicht näher erkennbaren Radträger gelagert und somit um eine Raddrehachse relativ zu dem Radträger und relativ zu dem Aufbau drehbar. Außerdem ist das Rad 14 über wenigstens einen Radlenker 16 gelenkig, insbesondere verschwenkbar, an dem Aufbau gehalten. Hierunter ist insbesondere zu verstehen, dass der Radlenker 16 in Fahrzeughochrichtung und relativ zu dem Aufbau erfolgende Ein- und Ausfederbewegungen des Rads 14 zulässt. Zu diesen Ein- und Ausfederbewegungen des Rads 14 kommt es beispielsweise dann, wenn das Rad 14 bei einer Fahrt des Kraftwagens über eine Bodenunebenheit rollt.

Das Rad 14 kann ein angetriebenes oder antreibbares Rad sein, welches mittels eines beispielsweise als elektrische Maschine oder Verbrennungsmotor ausgebildeten Antriebsmotors des Kraftwagens antreibbar ist. Ferner kann das Rad 14 ein nicht antreibbares oder nicht angetriebenes Rad sein. Des Weiteren ist es denkbar, dass das Rad 14 ein nicht-lenkbares Rad ist, welches nicht relativ zu dem Aufbau gelenkt werden kann, um Richtungsänderungen beziehungsweise Spurwechsel des Kraftwagens zu bewirken. Ferner ist es denkbar, dass das Rad 14 ein lenkbares Rad ist, welches zum Bewirken von Spurwechseln und Kurvenfahrten sowie Richtungsänderungen des Kraftwagens relativ zu dem Aufbau und relativ zu dem Radlenker 16, insbesondere zusammen mit dem Radträger, lenkbar ist.

Das Rad 14 weist eine Felge 18 und einen Reifen 20 auf, welcher auf die Felge 18 aufgezogen ist. Die Felge 18 weist dabei einen insbesondere senkrecht zur Raddrehachse verlaufenden Innendurchmesser auf, welcher insbesondere durch einen einfach auch als Ring bezeichneten Felgenring 22 der Felge 18 gebildet beziehungsweise begrenzt ist. Die Luftleiteinrichtung umfasst wenigstens ein dem Rad 14 zugeordnetes Luftleitelement 24, welches eine Luftleitfläche 26 zum Leiten von bei einer Fahrt des Kraftwagens die Luftleitfläche 26 anströmender Luft aufweist. Wie aus Figur 1 ersichtlich, ist das Luftleitelement 24 auf der Innenseite des Rades 14 beziehungsweise der Felge 18 angeordnet, also auf der, dem auf der gegenüberliegende Kraftwagenseite angeordneten anderen Vorderrad zugewandten Felgenseite.

Um nun eine besonders vorteilhafte Aerodynamik des Kraftwagens realisieren und somit den Kraftwagen besonders energieeffizient antreiben zu können, erstreckt sich die Luftleitfläche 26, insbesondere zumindest ein überwiegender Teil der Luftleitfläche 26 oder vorzugsweise die gesamte Luftleitfläche 26, in einer senkrecht zur Raddrehachse verlaufenden Ebene, welche insbesondere dann, wenn die Raddrehachse in Fahrzeugquerrichtung beziehungsweise parallel zur Fahrzeugquerrichtung (y-Richtung) verläuft, mit einer durch die Fahrzeuglängsrichtung (x-Richtung) und die Fahrzeughochrichtung (z-Richtung) aufgespannten x-z-Ebene zusammenfällt, die Raddrehachse in dieser x-z-Ebene liegt. Des Weiteren grenzt die Luftleitfläche 26 an einen in Fahrzeughochrichtung unteren Bereich B einer Flanke 28 der Felge 18 beziehungsweise des Felgenrings 22 in Fahrzeugquerrichtung nach innen und/oder in Fahrzeughochrichtung nach oben hin unmittelbar an, wobei sich die Luftleitfläche 26 außerdem in Fahrzeughochrichtung, insbesondere von dem unteren Bereich B nach oben hin, über weniger als die Hälfte des Innendurchmessers, insbesondere über höchstens ein Drittel des Innendurchmessers, erstreckt. Insbesondere ist es vorgesehen, dass die gesamte Luftleitfläche 26 in Fahrzeughochrichtung unterhalb des Radlenkers 16 angeordnet ist. Mittels der Luftleitfläche 26 kann vermieden werden, dass eine übermäßige Menge an Luft in die Felge 18 einströmt und zwar von der Innenseite des Rades 14 her. Außerdem kann ein übermäßiges Eindringen von Schmutz, Schnee und/oder anderen Objekten in die Felge 18 vermieden werden, so dass eine übermäßige Korrosion von Bauteilen der Achse 12 vermieden werden kann. Wichtig ist, dass das Luftleitelement 14 mit dem Felgenring 22 einen - vorzugsweise sehr schmalen - Spalt begrenzt, der zumindest so groß ist, dass beim Rotieren des Rades 14 ein schleifen des gegenüber der Felge ortsfest, das heißt unbeweglich beziehungsweise stillstehenden Luftleitelements 14 an der Felge vermieden wird. Vorzugsweise ist die Luftleitfläche 26 - in Fahrzeugquerrichtung (y-Richtung) gesehen - auf Höhe des in den Figuren nicht dargestellten hinteren Felgenhorns angeordnet und steht vorzugsweise nicht aus der Felge in Richtung der Fahrzeugmitte hervor. So schirmt das Luftleitelement den von der Felge 18 beziehungsweise dem Felgenring umgebenen Raum davor ab, dass anbeziehungsweise vorbeiströmende Luft an der Radinnenflanke in das Rad beziehungsweise die Felge hineinströmt. Ferner wird auch ein Eindringen von Schnee und anderer Verschmutzung in den von der Felge umgebenen Raum vorzugsweise verhindert, zumindest aber erheblich reduziert. Festzuhalten bleibt noch, dass während sich das Rad dreht, das Luftleitelement sich nicht mit dreht, sondern so an mindestens einer Kraftwagenkomponente gehalten ist, dass sich das Rad frei, das heißt relativ gegenüber dem Luftleitelement drehen kann.

Das vorstehend beschriebene Luftleitelement 24 ist im Wesentlichen als flache Scheibe ausgebildet, wobei dessen Außenkontur zumindest bei dem dargestellten Ausführungsbeispiel die Form eines Kreissegments aufweist. Unter einem auch als Kreisabschnitt bezeichneten Kreissegment ist die Teilfläche einer Kreisfläche zu verstehen, die von einem Kreisbogen und einer Kreissehne begrenzt wird. Der Radius des Kreissegments entspricht dabei im Wesentlichen beziehungsweise ist geringfügig kleiner als der Innendurchmesser der Felge in dem das Luftleitelement 24 umgebenden Abschnitts. Festzuhalten bleibt, dass das Luftleitelement 24 unterhalb der Raddrehachse angeordnet ist und dort den Innenraum gegenüber dem Eintrag von Luft, Wasser und Partikeln zumindest weitestgehend abschirmt.

Das Rad 14 ist zumindest teilweise, insbesondere zumindest überwiegend, in einem Radhaus 30 angeordnet, welches zumindest teilweise, insbesondere zumindest überwiegend, von einer auch als Radhausverkleidung bezeichneten Radlaufschale 32 des Kraftwagens begrenzt ist. Bei der in Figur 1 gezeigten ersten Ausführungsform ist die Achse 12 eine Vorderachse des Kraftwagens, so dass das Rad 14 ein Vorderrad ist. Außerdem ist in Figur 1 teilweise ein vorderer Stoßfänger 34 des Kraftwagens erkennbar.

Des Weiteren ist erkennbar, dass das Luftleitelement 24 beziehungsweise die Luftleitfläche 26 eine Abschirmung an der inneren, auch als Radflanke bezeichneten Flanke 28 im unteren Bereich B des Vorderrads ist. Hierdurch kann ein übermäßiges Eindringen von Schmutz und Luft in die Felge 18 vermieden werden.

Bei der ersten Ausführungsform ist die gesamte Luftleitfläche 26 frei von die Luftleitfläche 26 durchdringenden Durchgangsöffnungen. Demgegenüber zeigt Figur 2 eine zweite Ausführungsform der Luftleiteinrichtung. Bei der zweiten Ausführungsform weist das Luftleitelement 24 wenigstens oder genau eine die Luftleitfläche 26 durchdringende Durchgangsöffnung 36 auf. Der Durchgangsöffnung 36 ist ein Schließelement 38 zugeordnet, welches zwischen wenigstens einer in Figur 2 gezeigten Offenstellung O und einer Schließstellung relativ zu dem Luftleitelement 24 bewegbar zumindest mittelbar, insbesondere direkt, an dem Luftleitelement 24 gehalten ist. Somit ist das Schließelement 38 mit dem Luftleitelement 24 mitbewegbar. Außerdem ist es vorgesehen, dass das Rad 14 um die Raddrehachse relativ zu dem Luftleitelement 24 drehbar ist. In der Schließstellung verschließt das Schließelement 38 die gesamte Durchgangsöffnung 36, so dass in der Schließstellung keine Luft durch die Durchgangsöffnung 36 hindurchströmen kann. In der Offenstellung O jedoch gibt das Schließelement 38 die Durchgangsöffnung 36 frei, so dass dann Luft durch die Durchgangsöffnung 36 hindurchströmen kann.

Dem Rad 14 ist beispielsweise eine in den Figuren nicht erkennbare und insbesondere als Reibbremse ausgebildete Bremse zugeordnet, mittels welcher das Rad 14 und somit der Kraftwagen insgesamt abgebremst werden kann. Insbesondere ist die Bremse Bestandteil einer Betriebsbremse des Kraftwagens. In der Offenstellung O kann Luft durch die freigegebene Durchgangsöffnung 36 hindurchströmen, wobei die die Durchgangsöffnung 36 durchströmende Luft beispielsweise der genannten Bremse zugeführt werden kann. Hierdurch kann eine Bremsbelüftung realisiert werden, in deren Rahmen die Bremse mittels der die Durchgangsöffnung 36 durchströmenden Luft gekühlt wird. Da die Durchgangsöffnung 36 mittels des Schließelements 38 bedarfsgerecht verschlossen und freigegeben werden kann, kann die Bremse bedarfsgerecht gekühlt werden. Hierzu kann die Luftleiteinrichtung wenigstens einen beispielsweise als Stellmotor ausgebildeten Aktor umfassen, welcher hydraulisch und/oder pneumatisch und/oder elektrisch betreibbar ist. Durch Betreiben des Aktors kann beispielsweise das Schließelement 38 relativ zu dem Luftleitelement 24 aus der Offenstellung O in die Schließstellung und/oder aus der Schließstellung in die Offenstellung bewegt werden. Alternativ oder zusätzlich können dem Schließelement 38 wenigstens eine oder mehrere passive Elemente wie beispielsweise wenigstens eine Feder und/oder wenigstens ein Bimetall und/oder wenigstens eine Formgedächtnislegierung zugeordnet sein, um hierdurch das Schließelement 38 relativ zu dem Luftleitelement 24 aus der Schließstellung in die Offenstellung O und/oder aus der Offenstellung O in die Schließstellung zu bewegen.

Ist beispielsweise eine Temperatur der Bremse geringer als ein vorgebbarer oder vorgegebener Schwellenwert, so befindet sich das Schließelement 38 in der Schließstellung, da eine Kühlung der Bremse nicht erforderlich ist. Hierdurch kann eine vorteilhafte Aerodynamik realisiert werden. Entspricht die Temperatur der Bremse dem Schwellenwert oder überschreitet die Temperatur der Bremse den Schwellenwert, so wird das Schließelement 38 aus der Schließstellung in die Offenstellung O bewegt, so dass Luft als Kühlluft durch die Durchgangsöffnung 36 hindurchströmen, zu der Bremse strömen und die Bremse kühlen kann. Sinkt durch diese Kühlung der Bremse die auch als Bremsentemperatur bezeichnete Temperatur der Bremse unter den Schwellenwert, so wird dann das Schließelement 38 aus der Offenstellung O in die Schließstellung bewegt, um die Durchgangsöffnung 36 wieder zu verschließen.

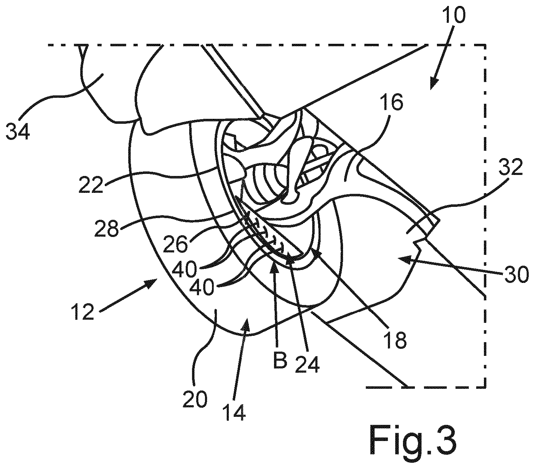

Insbesondere je nach Fahrzeug, Ausführung etc. kann es vorteilhaft sein, weitere Luftleitelemente vorzusehen. Figur 3 zeigt eine dritte Ausführungsform der Luftleiteinrichtung. Bei der dritten Ausführungsform weist das Luftleitelement mehrere, voneinander beabstandete Wirbelgeneratoren 40 auf, welche in Fahrzeugquerrichtung nach innen hin von der Luftleitfläche 26 abstehen. Der jeweilige Wirbelgenerator 40 ist beispielsweise gewölbt ausgebildet. Der jeweilige Wirbelgenerator 40 ist dazu ausgebildet, die Luft, welche das Luftleitelement 24 anströmt, gezielt zu verwirbeln und somit wenigstens einen oder mehrere Wirbel der das Luftleitelement 24 anströmenden Luft zu erzeugen. Hierdurch kann der Luftwiderstand besonders gering gehalten werden. Bei der dritten Ausführungsform sind die Wirbelgeneratoren 40 in Fahrzeuglängsrichtung aufeinanderfolgend angeordnet, derart, dass sich die Wirbelgeneratoren 40 in Fahrzeuglängsrichtung jeweils gegenseitig paarweise zumindest teilweise überlappen.

## Patentansprüche

1. Luftleiteinrichtung für einen Kraftwagen, mit wenigstens einem, um eine Raddrehachse drehbaren und eine einen Felgenring (22) aufweisende Felge (18) mit einem Innendurchmesser aufweisenden Rad (14) des Kraftwagens und mit einem dem Rad (14) zugeordneten Luftleitelement (24), welches eine Luftleitfläche (26) zum Leiten von bei einer Fahrt des Kraftwagens die Luftleitfläche (26) anströmender Luft aufweist,
**dadurch gekennzeichnet,**
- **dass** das Luftleitelement (24) unterhalb der Raddrehachse angeordnet ist,
- **dass** sich die Luftleitfläche (26) des Luftleitelements (24) in einer senkrecht zur Raddrehachse verlaufenden Ebene erstreckt und an einen in Fahrzeughochrichtung unteren Bereich (B) einer inneren Flanke (28) der Felge (18) in Fahrzeugquerrichtung nach innen und/oder in Fahrzeughochrichtung nach oben unmittelbar angrenzt und so ausgebildet ist, dass dabei ein Eindringen von vorbeiströmender Luft, Schnee und anderer Partikel in einen vom Felgenring (22) umgebenen Raum zumindest erheblich reduziert ist, und
- **dass** sich die Luftleitfläche (26) in Fahrzeughochrichtung über weniger als die Hälfte des Innendurchmessers der Felge (18) erstreckt.

2. Luftleiteinrichtung nach Anspruch 1,
**dadurch gekennzeichnet, dass**
das Luftleitelement (24) wenigstens eine die Luftleitfläche (26) durchdringende Durchgangsöffnung (36) aufweist.

3. Luftleiteinrichtung nach Anspruch 2,
**dadurch gekennzeichnet, dass**
der Durchgangsöffnung (36) ein Schließelement (38) zugeordnet ist, welches relativ zu dem Luftleitelement (24) zwischen wenigstens einer zumindest einen Teilbereich der Durchgangsöffnung (36) verschließenden Schließstellung und wenigstens einer den Teilbereich freigebenden Offenstellung (O) bewegbar ist.

4. Luftleiteinrichtung nach Anspruch 3,
**dadurch gekennzeichnet, dass**
das Schließelement (38) bewegbar an dem Luftleitelement (24) gehalten ist.

5. Luftleiteinrichtung nach Anspruch 3 oder 4,
**dadurch gekennzeichnet, dass**
ein elektrisch und/oder hydraulisch und/oder pneumatisch betreibbarer Aktor vorgesehen ist, mittels welchem das Schließelement (38) relativ zu dem Luftleitelement (24) bewegbar ist.

6. Luftleiteinrichtung nach einem der Ansprüche 3 bis 5,
**dadurch gekennzeichnet, dass**
wenigstens ein Federelement zum Bewegen des Schließelements (38) vorgesehen ist.

7. Luftleiteinrichtung nach einem der Ansprüche 3 bis 6,
**dadurch gekennzeichnet, dass**
wenigstens ein Bimetall und/oder wenigstens eine Formgedächtnislegierung zum Bewegen des Schließelements (38) vorgesehen ist.

8. Luftleiteinrichtung nach einem der vorhergehenden Ansprüche,
**dadurch gekennzeichnet, dass**
das Rad (14) relativ zu dem Luftleitelement (24) drehbar ist und/oder das Luftleitelement (24) an einem Radlenker (16) gehalten ist, über welchen das Rad (14) gelenkig an einem Aufbau des Kraftwagens gehalten ist.

9. Luftleiteinrichtung nach einem der vorhergehenden Ansprüche,
**dadurch gekennzeichnet, dass**
das Luftleitelement (24) wenigstens einen von der Luftleitfläche (26) in Fahrzeugquerrichtung abstehenden Wirbelgenerator (40) aufweist, mittels welchem gezielt wenigstens ein Wirbel der das Luftleitelement (24) anströmenden Luft erzeugbar ist.

10. Kraftwagen, mit wenigstens einer Luftleiteinrichtung nach einem der vorhergehenden Ansprüche.

## Claims

1. Air guiding device for a motor vehicle, having at least one wheel (14) of the motor vehicle, which can be rotated about a wheel axis of rotation and comprising a rim (18) having an inner diameter and comprising a rim ring (22), and an air guiding element (24), which is associated with the wheel (14) and comprises an air guiding surface (26) for guiding air flowing toward the air guiding surface (26) when the motor vehicle is traveling,
**characterized in that**
- the air guiding element (24) is arranged below the wheel axis of rotation,
- the air guiding surface (26) of the air guiding element (24) extends in a plane perpendicular to the wheel axis of rotation and directly adjoins a region (B), which is lower in the vertical direction of the vehicle, of an inner flank (28) of the rim (18) inwardly in the transverse direction of the vehicle and/or upwardly in the vertical direction of the vehicle and is designed in such a way that the penetration of air flowing past, snow and other particles into a space surrounded by the rim ring (22) is at least significantly reduced, and
- the air guiding surface (26) extends in the vertical direction of the vehicle over less than half of the inner diameter of the rim (18).

2. Air guiding device according to claim 1,
**characterized in that**
the air guiding element (24) comprises at least one through-opening (36) which penetrates the air guiding surface (26).

3. Air guiding device according to claim 2,
**characterized in that**
a closing element (38) is associated with the through-opening (36), which closing element can be moved relative to the air guiding element (24) between at least one closed position, which closes at least a portion of the through-opening (36), and at least one open position (O), which releases the portion.

4. Air guiding device according to claim 3,
**characterized in that**
the closing element (38) is movably held on the air guiding element (24).

5. Air guiding device according to claim 3 or claim 4,
**characterized in that**
an electrically and/or hydraulically and/or pneumatically operable actuator is provided, by means of which the closing element (38) can be moved relative to the air guiding element (24).

6. Air guiding device according to any of claims 3 to 5,
**characterized in that**
at least one spring element is provided for moving the closing element (38).

7. Air guiding device according to any of claims 3 to 6,
**characterized in that**
at least a bimetal and/or at least a shape memory alloy is provided for moving the closing element (38).

8. Air guiding device according to any of the preceding claims,
**characterized in that**
the wheel (14) can be rotated relative to the air guiding element (24) and/or the air guiding element (24) is held on a wheel suspension arm (16) by means of which the wheel (14) is pivotally held on a body of the motor vehicle.

9. Air guiding device according to any of the preceding claims,
**characterized in that**
the air guiding element (24) comprises at least one vortex generator (40) which projects from the air guiding surface (26) in the transverse direction of the vehicle and by means of which at least one vortex of the air flowing toward the air guiding element (24) can be generated in a targeted manner.

10. Motor vehicle comprising at least one air guiding device according to any of the preceding claims.

## Revendications

1. Dispositif de guidage d'air pour un véhicule à moteur, comportant au moins une roue (14) du véhicule à moteur, pouvant tourner autour d'un axe de rotation de roue et présentant une jante (18) présentant un anneau de jante (22) comportant un diamètre interne, et comportant un élément de guidage d'air (24) associé à la roue (14), lequel élément présente une surface de guidage d'air (26) pour guider l'air arrivant sur la surface de guidage d'air (26) lors d'un déplacement du véhicule à moteur,
**caractérisé en ce**
- **que** l'élément de guidage d'air (24) est agencé en dessous de l'axe de rotation de roue,
- **que** la surface de guidage d'air (26) de l'élément de guidage d'air (24) s'étend dans un plan se prolongeant perpendiculairement à l'axe de rotation de roue et est directement adjacente à une zone inférieure (B), dans le sens de la hauteur du véhicule, d'un flanc interne (28) de la jante (18) vers l'intérieur dans le sens transversal du véhicule et/ou vers le haut dans le sens de la hauteur du véhicule et est réalisée de telle sorte qu'une pénétration d'air, de neige et d'autres particules s'écoulant au passage dans un espace entouré par l'anneau de jante (22) est au moins considérablement réduite, et
- **que** la surface de guidage d'air (26) s'étend, dans le sens de la hauteur du véhicule, sur moins de la moitié du diamètre interne de la jante (18).

2. Dispositif de guidage d'air selon la revendication 1,
**caractérisé en ce que**
l'élément de guidage d'air (24) présente au moins une ouverture de passage (36) traversant la surface de guidage d'air (26).

3. Dispositif de guidage d'air selon la revendication 2,
**caractérisé en ce que**
à l'ouverture de passage (36) est associé un élément de fermeture (38), qui est mobile par rapport à l'élément de guidage d'air (24) entre au moins une position de fermeture fermant au moins une zone partielle de l'ouverture de passage (36) et au moins une position d'ouverture (O) libérant la zone partielle.

4. Dispositif de guidage d'air selon la revendication 3,
**caractérisé en ce que**
l'élément de fermeture (38) est maintenu de manière mobile sur l'élément de guidage d'air (24).

5. Dispositif de guidage d'air selon la revendication 3 ou 4,
**caractérisé en ce que**
il est prévu un actionneur pouvant être actionné électriquement et/ou hydrauliquement et/ou pneumatiquement, par le biais duquel l'élément de fermeture (38) peut être placé en mouvement par rapport à l'élément de guidage d'air (24).

6. Dispositif de guidage d'air selon l'une des revendications 3 à 5,
**caractérisé en ce que**
au moins un élément de ressort est prévu pour placer l'élément de fermeture (38) en mouvement.

7. Dispositif de guidage d'air selon l'une des revendications 3 à 6,
**caractérisé en ce que**
au moins un bimétal et/ou au moins un alliage à mémoire de forme est prévu pour le mouvement de l'élément de fermeture (38).

8. Dispositif de guidage d'air selon l'une des revendications précédentes,
**caractérisé en ce que**
la roue (14) peut tourner par rapport à l'élément de guidage d'air (24) et/ou l'élément de guidage d'air (24) est maintenu sur un bras de roue (16), par l'intermédiaire duquel la roue (14) est maintenue de manière articulée sur une carrosserie du véhicule à moteur.

9. Dispositif de guidage d'air selon l'une des revendications précédentes,
**caractérisé en ce que**
l'élément de guidage d'air (24) présente au moins un générateur de tourbillons (40) faisant saillie de la surface de guidage d'air (26) dans le sens transversal du véhicule, générateur par le biais duquel au moins un tourbillon de l'air affluant sur l'élément de guidage d'air (24) peut être généré de manière ciblée.

10. Véhicule à moteur, comportant au moins un dispositif de guidage d'air selon l'une des revendications précédentes.
